# EUROPÄISCHE PATENTSCHRIFT

(11) **EP 4 011 480 B1**
(45) Veröffentlichungstag und Bekanntmachung des Hinweises auf die Patenterteilung: **08.03.2023**
(21) Anmeldenummer: 20212692.6
(22) Anmeldetag: 09.12.2020
(51) Int. Cl.: B01D 46/00, B01D 46/12, B01D 46/52

(54) **KLAPPBARE FILTERANORDNUNG BESTEHEND AUS MEHREREN EINZELFILTERELEMENTEN**
FOLDABLE FILTER ASSEMBLY COMPRISING A PLURALITY OF INDIVIDUAL FILTER ELEMENTS
AGENCEMENT DE FILTRE PLIABLE COMPRENANT PLUSIEURS ÉLÉMENTS FILTRANTS INDIVIDUELS

(43) Veröffentlichungstag der Anmeldung: 15.06.2022
(73) Patentinhaber: Carl Freudenberg KG, 69469 Weinheim (DE)
(72) Erfinder: Beisel, Tobias, 69509 Mörlenbach (DE); Oelsner, Alexander, 68309 Mannheim (DE); Krambs, Christoph, 69120 Heidelberg (DE); Zimmermann, Peter, 69518 Abtsteinach (DE); Karasu, Emre, 69469 Weinheim (DE); Capuani, Peter, 69483 Waldmichelbach (DE)

(56) Entgegenhaltungen:
- DE-A1-102020 113 615
- DE-C2- 3 834 942
- JP-A- 2005 007 361
- US-A1- 2009 320 426

## Beschreibung

### Technisches Gebiet

Die Erfindung betrifft eine Filteranordnung zur Reinigung eines Luftstroms aufweisend mindestens drei Filterelemente, wobei ein jeweiliges Filterelement einen Faltenbalg aus plissiertem Filtermedium besitzt, wobei die Filterelemente aneinandergereiht sind und immer zwei aneinander angrenzende Filterelemente mittels je einer Verbindungslasche miteinander verbunden sind.

### Stand der Technik

Aus dem Stand der Technik sind die unterschiedlichsten Filter zur Filtration von Luftströmen bekannt, wie sie z.B. in Klimaanlagen, Luftreinigern, Staubsaugern, etc. zur Anwendung kommen. Um eine größere wirksame Filterfläche zu erreichen, wird das Filtermedium üblicher Weise mehrfach gefaltet, insbesondere plissiert.

Bei der Luftfiltration für Fahrzeugkabinen kommen Filter mit plissierten Filtermedien zum Einsatz, wie beispielsweise in der DE 10 2004 005 904 B4 beschrieben. Die Filtermedien können dabei verschiedene Lagen aufweisen, z.B. elektrisch leitfähige und funktionale Lagen. Auch kann eine Lage mit einer elektrostatischen Lage versehen sein, welche den Abscheidegrad des Filters erhöht.

Wichtig für eine gute Filtrationsleistung ist, dass der gesamte zu filternde Luftstrom durch das Filterelement geführt wird und keine Leckage besteht. In anderen Worten: das Filterelement muss leckagefrei in einem Filtergehäuse bzw. einer Filteraufnahme aufgenommen werden. Häufig ist der Bauraum beengt und es stehen nur kleine Öffnungen fürs Einführen der Filterelemente in die Filteraufnahme zur Verfügung.

Besteht eine Filteranordnung aus mehreren Filterelementen, so muss sichergestellt sein, dass auch zwischen den Filterelementen keine Leckage auftritt. Eine weitere Schwierigkeit besteht bei der Montage der Filterelemente: zum einen müssen diese mit korrekter Ausrichtung in eine Filteraufnahme montiert werden. Zum anderen darf der Montageprozess nicht aufwändig und kompliziert sein und muss in kurzer Zeit möglichst ohne Hilfsmittel erfolgen können.

Die DE 38 34 942 C2 schlägt dazu vor, einzelne Filterelemente durch ein flexibles Band miteinander zu verbinden. Das Band zwischen den einzelnen Filterelementen ist dabei so lang, dass aneinander angrenzende Filterelemente aufeinandergelegt werden können. Auf Grund der Länge des Bandes und seiner Befestigung an den Filterelementen kann zwischen den jeweiligen Filterelementen auch in montiertem Zustand ein Abstand verbleiben. Dies ist nachteilig, da die zu filternde Luft dann nicht durch die Filterelemente hindurchgeführt wird. Zudem offenbaren die DE 102020113615 und die US 2009320426 drei miteinander verbundene und zieharmonikaartig aufeinander ablegbare Filterelemente.

### Aufgabenstellung

Aufgabe der vorliegenden Erfindung ist es eine Filteranordnung zur Reinigung eines Luftstroms aufweisend mindestens drei Filterelemente zu schaffen, wobei die Filterelement so miteinander verbunden sind, dass eine einfache Montage der Filterelemente in einer Filteraufnahme ermöglicht wird und ein definierter Sitz der Filterelemente in der Filteraufnahme sichergestellt ist.

### Technische Lösung

Gelöst wird diese Aufgabe durch eine Filteranordnung wie sie nachfolgend beschrieben und beansprucht ist.

Erfindungsgemäß wurde als vorteilhaft erkannt Verbindungslaschen von zwei unterschiedlichen Ausgestaltungen zu verwenden.

Die erfindungsgemäße Filteranordnung dient zur Reinigung eines Luftstroms, z.B. in der Klimaanlage eines Kraftfahrzeuges, aufweisend mindestens drei Filterelemente, wobei ein jeweiliges Filterelement einen Faltenbalg aus plissiertem Filtermedium besitzt, wobei die Filterelemente in Längsrichtung der Filteranordnung aneinander gereiht sind und immer zwei aneinander angrenzende Filterelemente mittels je einer flexiblen, bandförmigen Verbindungslasche miteinander verbunden sind. Insbesondere ist eine Verbindungslasche je mit zwei Filterelementen verklebt oder thermisch verschweißt.

Ein jeweiliger Faltenbalg kann an seinen beiden einander gegenüber liegenden Längsseiten mit einem Kantenband versehen sein.

Die Faltenbalge der Filterelemente sind so angeordnet, dass der Faltenauslauf aller Endfalten, also der jeweils äußersten Falten, in eine Richtung orientiert ist, nämlich entweder zur Anströmseite hin oder zur Abströmseite hin.

In vorteilhafter Weise sind die Verbindungslaschen von zwei unterschiedlichen Ausgestaltungen (Scharniertyp a, Scharniertyp b) und die unterschiedlichen Ausgestaltungen der Verbindungslaschen sind - in Längsrichtung der Filteranordnung gesehen - alternierend, also abwechselnd zwischen je zwei Filterelementen (F) angeordnet (also: F a F b F...).

In der erfindungsgemäßen Filteranordnung weist - im Längsschnitt entlang der Längsachse der ausgeklappten Filteranordnung betrachtet - eine erste Ausgestaltung der Verbindungslasche ausschließlich eine umgekehrte, d.h. auf dem Kopf stehende V-Form, also Λ-Form und eine zweite Ausgestaltung der Verbindungslasche ausschließlich eine U-Form auf. An den Schenkeln der Λ-Form bzw. der U-Form ist diese mit den Endfalten der Faltenbalge flächig verbunden. Die Ausbildung und Anordnung der Verbindungslaschen ist dabei derart, dass die Filterelemente in einem eingeklappten Zustand ziehharmonikaartig aufeinander ablegbar sind und in einem ausgeklappten Zustand in ihren aneinander angrenzenden Endfalten aneinander anliegen. So wird sowohl eine einfache Montage der Filterelemente in einer Filteraufnahme ermöglicht als auch ein definierter Sitz der Filterelemente in der Filteraufnahme sichergestellt.

Wenn ein jeweiliger Faltenbalg an seinen beiden einander gegenüber liegenden Längsseiten mit einem Kantenband versehen ist, kann es zur Verbesserung von Montage und Sitz der Filterelemente vorteilhaft sein, wenn die Verbindungslaschen nicht in zur Anströmseite oder Abströmseite über die Kantenbänder hinausragen. Dazu darf die Länge der Verbindungslaschen die doppelte Höhe des Kantenbandes nicht übersteigen.

In Weiterbildung der Filteranordnung können die Verbindungslaschen an ihren Soll-Faltkanten einen reduzierten Querschnitt aufweisen, um so eine definierte Klappbewegung um die Soll-Faltkante als Klappachse zu erreichen. Dies kann beispielsweise durch mechanisches Einritzen bzw. Prägen oder durch Bearbeitung mittels eines Lasers erfolgen.

In der Filteranordnung sind die Verbindungslaschen bevorzugt aus einem Filtermaterial gefertigt. Dadurch wird sichergestellt, dass Luft, welche die Verbindungslaschen passiert, ebenfalls gefiltert wird.

In möglicher Ausgestaltung des Filtermaterials ist dieses ein sogenanntes Kantenband aus Vliesstoff. Alternative Begriffe für "Kantenband" sind auch "Seitenband", "Seitenstreifen" oder "Kantenstreifen". Das Kantenband ist ein Band bzw. Streifen aus einem flächigen Filtermaterial mit einer gewissen Eigenstabilität.

In möglicher Ausgestaltung des Filtermaterials kann dieses antiallergene und/oder antivirale Eigenschaften haben. Dies ist besonders dann bevorzugt, wenn auch das Filtermedium des Faltenbalgs antiallergene und/oder antivirale Eigenschaften hat.

Eine besonders gute Filtrationsleistung kann erreich werden, wenn das Filtermedium mehrlagig ausgeführt ist, zumindest eine funktionale Lage besitzt und eine bevorzugte Anströmrichtung aufweist, sodass die Lagen des Filtermediums in der "richtigen" Reihenfolge durchströmt werden. Die funktionale Lage kann antiallergene, antifungizide und/oder antivirale Eigenschaften aufweisen und beispielsweise ausgeführt sein, wie beschrieben in der EP3162425B1.

In vorteilhafter Weise gibt es in einer Filteranordnung mit antiallergenen und/oder antiviralen Eigenschaften von Filtermedium und Filtermaterial keine luftdurchströmten Bereiche welche keine antiallergenen und/oder antiviralen Eigenschaften haben und Allergene und/oder Viren ungefiltert passieren könnten.

Die Filteranordnung kann Filterelemente besitzen, die je eine Quaderform aufweisen und insbesondere brettförmig ausgebildet sind, d.h. im Verhältnis recht lang, weniger breit und nicht sehr hoch. Eine solche Filteranordnung kann z.B. in Fahrzeugkabinen von Bussen, Personenzügen und Flugzeugen zur Verwendung kommen.

In der Fertigung der Filteranordnung ergibt sich ein besonderer Vorteil, wenn alle Filterelemente identisch in ihrem Aufbau sind.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll anhand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1: eine Übersichtsdarstellung einer Filteranordnung mit drei Filterelementen
- Fig. 2a: eine Filteranordnung in zusammengeklapptem Zustand
- Fig. 2b: eine Filteranordnung in ausgeklapptem Zustand
- Fig. 2c: eine Detailansicht der Verbindungslaschen zwischen den Filterelementen
- Fig. 3: eine Schnittdarstellung eines Filterelements
- Fig. 4: eine Schnittdarstellung eines Filtermediums

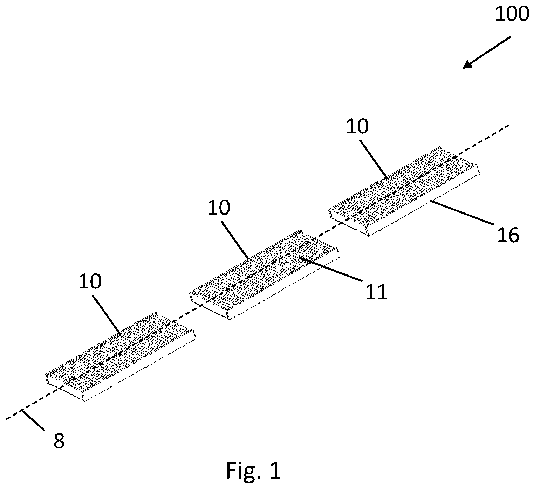

Fia. 1 zeigt eine Übersichtsdarstellung einer Filteranordnung 100 mit drei Filterelementen 10. Die Filterelemente 10 sind aneinandergereiht entlang der Längsachse 8 der Filteranordnung 100. Ein jeweiliges Filterelement 10 besitzt einen Faltenbalg 11 und an den sich gegenüberliegenden Längskanten jeweils ein Kantenband 16, welches zur Abdichtung und zur Stabilisierung des Faltenbalgs 11 dient. In der Darstellung von Fig. 1 wurden die Filterelemente 10 beabstandet zueinander dargestellt, sodass ein Zustand während des Fertigungsprozesses dargestellt ist, bevor die Filterelemente 10 mittels Verbindungslaschen 1 (nicht dargestellt) miteinander verbunden werden.

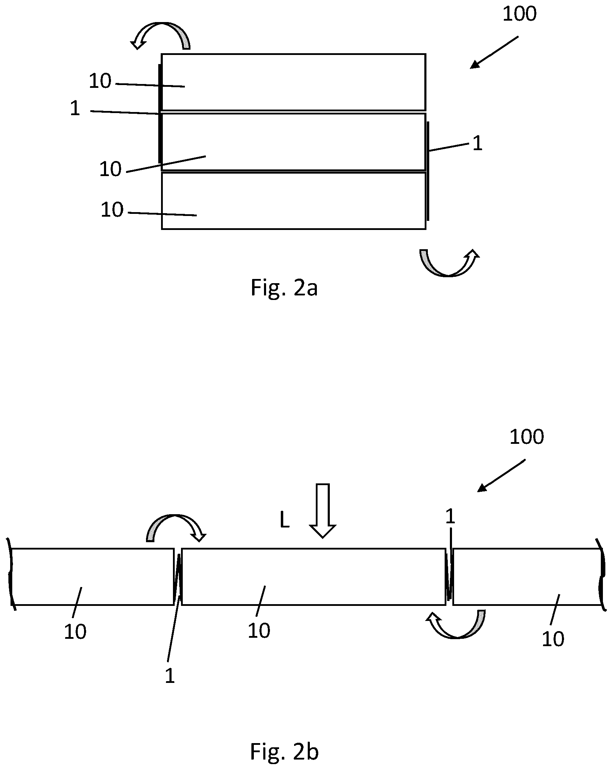

Die Verbindung der Filterelemente 10 mittels Verbindungslaschen 1 geht aus den Figuren 2a-c hervor.

In Fig. 2a ist eine Filteranordnung 100 in zusammengeklapptem Zustand dargestellt. Die Filterelemente 10 wurden ziehharmonikaförmig aufeinander abgelegt, sodass die Filteranordnung 100 nur einen geringen Platzbedarf hat, was z.B. für Lagerung und Transport von Vorteil ist. Zwei aneinander angrenzende Filterelemente 10 sind mittels einer Verbindungslasche 1 miteinander verbunden. Die Verbindungslasche kann an die beiden Filterelemente 10 angeklebt oder angeschweißt sein.

Die oberen beiden Filterelemente 10 sind mittels der Verbindungslasche 1 links im Bild und die beiden unteren Filterelemente 10 sind mittels der Verbindungslasche 1 rechts im Bild miteinander verbunden. So ist das oberste Filterelement 10 mittels der beiden Verbindungslaschen 1 und dem mittleren Filterelement mittelbar mit dem untersten Filterelement 10 verbunden.

Wie durch die Pfeile angedeutet kann durch Umklappen von oberstem und unterstem Filterelement 10 die Filteranordnung 100 in einen ausgeklappten Zustand verbracht werden.

In Fig. 2b ist die Filteranordnung aus Fig. 2a in ausgeklapptem Zustand gezeigt. In diesem ausgeklappten Zustand kann die Filteranordnung 100 in einer Filteraufnahme (nicht dargestellt) aufgenommen sein und von einem Luftstrom L durchströmt werden, wobei der Luftstrom L gereinigt wird.

Wie durch die Pfeile angedeutet kann durch Umklappen der äußersten beiden Filterelemente 10 die Filteranordnung in einen eingeklappten Zustand verbracht werden.

Während in den Figuren 1, 2a und 2b jeweils nur drei Filterelemente abgebildet sind, kann auch eine größere Anzahl von Filterelementen 10 vorgesehen sein und eine Filteranordnung 100 bilden.

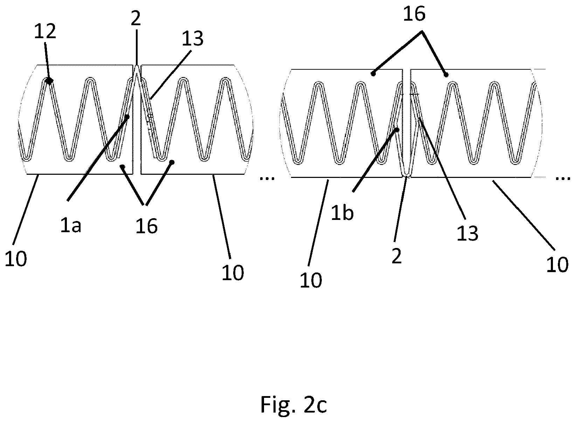

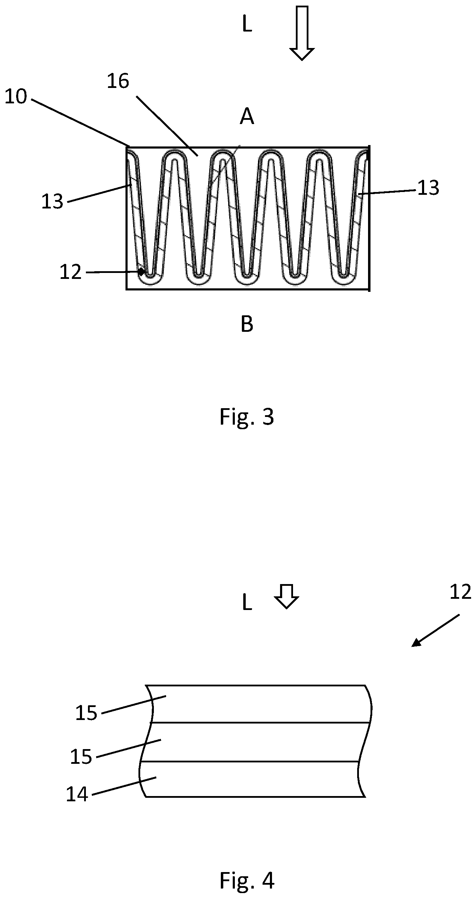

Zwischen den Filterelementen 10 kommen zwei unterschiedliche Ausgestaltungen von Verbindungslaschen 1 zum Einsatz, nämlich von einem ersten Scharniertyp 1a und einem zweiten Scharniertyp 1b. Fig. 2c zeigt eine Detailansicht der Verbindungslaschen 1a, 1b zwischen den Filterelementen 10 in einer Schnittdarstellung. Im Schnitt ist auch das plissierte Filtermedium 12 und die Kantenbänder 16 zu erkennen. Der Aufbau des Filtermediums 12 ist genauer anhand von Fig. 4 erläutert.

In Längsrichtung 8 der Filteranordnung 100 betrachtet sind die Verbindungslaschen 1 von einem ersten Scharniertyp 1a und einem zweiten Scharniertyp 1b alternierend angeordnet, sodass sich eine solche Reihenfolge ergibt: Filterelement 10 - Scharniertyp 1a - Filterelement 10 - Scharniertyp 1b - Filterelement 10 - ...

Die Verbindungslaschen des ersten Scharniertyps 1a weisen - im Längsschnitt entlang der Längsachse 8 der Filteranordnung betrachtet - eine umgekehrte, d.h. auf dem Kopf stehende V-Form, also Λ-Form auf.

Die Verbindungslaschen des zweiten Scharniertyps 1b weisen - im Längsschnitt entlang der Längsachse 8 der Filteranordnung betrachtet - eine U-Form auf.

An den Schenkeln der Λ-Form bzw. der U-Form ist diese mit den Endfalten 13 der Faltenbalge 11 der Filterelemente 10 flächig verbunden.

An ihren Soll-Faltkanten weisen die Verbindungslaschen 1a, 1b einen reduzierten Querschnitt 2 auf, was ein definiertes Umklappen erleichtert.

Der Faltenauslauf aller Endfalten 13, also der jeweils äußersten Falten, ist in eine Richtung orientiert, nämlich bevorzugt zur Anströmseite A hin, wie dies auch aus der Schnittdarstellung eines Filterelements 10 in Fig. 3 hervorgeht. Die Länge der Verbindungslaschen 1 übersteigt die doppelte Höhe des Kantenbandes 16 nicht und die Verbindungslaschen 1 ragen nicht zur Anströmseite A oder Abströmseite B hin über die Kantenbänder hinaus, wodurch eine gute Montage und ein guter Sitz der Filterelemente 10 der Filteranordnung 100 in einer Filteraufnahme (nicht dargestellt) gewährleistet wird.

Zur besseren Übersichtlichkeit weist der Faltenbalg 11 des Filterelements 10 in Fig. 3 ein plissiertes Filtermedium 12 mit einer nur eine geringe Anzahl von Falten auf. Die jeweils äußersten Falten werden als Endfalten 13 bezeichnet und sind zur Anströmseite A hin orientiert. Das Filterelement 10 wird von der Anströmseite bzw. Rohgasseite A mit einem Luftstrom L angeströmt, welcher durch das Filterelement 10 hindurch strömt zur Abströmseite bzw. Reingasseite B hin und dabei gereinigt wird.

Fig. 4 ist eine Schnittdarstellung eines Filtermediums 12. Das Filtermedium 12 ist mehrlagig aufgebaut und besitzt im Beispiel hier drei Lagen, eine erste Lage 15, eine mittlere Lage 15 und eine letzte funktionale Lage 14. Die funktionale Lage 14 kann antiallergene, antifungizide und/oder antivirale Eigenschaften aufweisen. Damit die Lagen 14, 15 des Filtermediums 12 in der "richtigen" Reihenfolge durchströmt werden ist eine bevorzugte Anströmrichtung L vorgesehen.

### Bezugszeichenliste

- 1: Verbindungslasche
- 1a: Verbindungslasche erster Ausgestaltung mit einem Scharniertyp U
- 1a: Verbindungslasche zweiter Ausgestaltung mit einem Scharniertyp Λ
- 2: reduzierter Querschnitt

- 8: Längsachse und Längsrichtung der Filteranordnung

- 10: Filterelement
- 11: Faltenbalg
- 12: Filtermedium
- 13: Endfalte
- 14: funktionale Lage
- 15: Lage
- 16: Kantenband

- 100: Filteranordnung

- A: Anströmseite und Rohgasseite
- B: Abströmseite und Reingasseite
- L: Luftstrom mit Anströmrichtung

## Patentansprüche

1. Filteranordnung (100) zur Reinigung eines Luftstroms (L) aufweisend mindestens drei Filterelemente (10), wobei ein jeweiliges Filterelement (10) einen Faltenbalg (11) aus plissiertem Filtermedium (12) besitzt, wobei die Filterelemente (10) aneinander gereiht sind und immer zwei aneinander angrenzende Filterelemente (10) mittels je einer Verbindungslasche (1) miteinander verbunden sind,
**dadurch gekennzeichnet, dass**
der Faltenauslauf aller Endfalten (13) aller Faltenbalge (11) in eine Richtung (A, B) orientiert ist,
dass die Verbindungslaschen (1) von zwei unterschiedlichen Ausgestaltungen (1a, 1b) sind und die unterschiedlichen Ausgestaltungen der Verbindungslaschen - in Längsrichtung (8) der Filteranordnung (100) gesehen - alternierend angeordnet sind und dass - im Längsschnitt betrachtet - eine erste Ausgestaltung der Verbindungslasche (1a) eine umgekehrte V-Form und eine zweite Ausgestaltung der Verbindungslasche (1b) eine U-Form aufweist;
wobei Endfalten (13) der Faltenbalge flächig mit Schenkeln der umgekehrten V-Form und der U-Form verbunden sind, derart, dass die Filterelemente (10) in einem eingeklappten Zustand ziehharmonikaartig aufeinander ablegbar sind und in einem ausgeklappten Zustand in ihren aneinander angrenzenden Endfalten (13) aneinander anliegen.

2. Filteranordnung nach Anspruch 1,
**dadurch gekennzeichnet, dass**
die Verbindungslaschen (1) an ihren Soll-Faltkanten einen reduzierten Querschnitt (2) aufweisen.

3. Filteranordnung nach einem der vorangehenden Ansprüche,
**dadurch gekennzeichnet, dass**
die Verbindungslaschen (1) aus einem Filtermaterial gefertigt sind.

4. Filteranordnung nach Anspruch 3,
**dadurch gekennzeichnet, dass**
das Filtermaterial (1) ein sogenanntes Kantenband aus Vliesstoff ist.

5. Filteranordnung nach einem der Ansprüche 3 oder 4
**dadurch gekennzeichnet, dass**
das Filtermaterial (1) antiallergene und/oder antivirale Eigenschaften hat.

6. Filteranordnung nach einem der vorangehenden Ansprüche,
**dadurch gekennzeichnet, dass**
das Filtermedium (12) mehrlagig ausgeführt ist, zumindest eine funktionale Lage (14) besitzt und eine bevorzugte Anströmrichtung (L) aufweist.

7. Filteranordnung nach einem der vorangehenden Ansprüche,
**dadurch gekennzeichnet, dass**
die Filterelemente (10) je eine Quaderform aufweisen.

8. Filteranordnung nach einem der vorangehenden Ansprüche,
**dadurch gekennzeichnet, dass**
alle Filterelemente (10) identisch in ihrem Aufbau sind.

## Claims

1. Filter arrangement (100) for cleaning an air stream (L), having at least three filter elements (10), wherein a respective filter element (10) has a corrugated bellows (11) made of pleated filter medium (12), wherein the filter elements (10) are arranged in line with one another and it is always the case that two mutually adjacent filter elements (10) are connected to one another by means of in each case one link (1),
**characterized in that**
the fold run-out of all the end folds (13) of all the corrugated bellows (11) is oriented in one direction (A, B),
**in that** the links (1) are of two different designs (1a, 1b) and the different designs of the links - as seen in the longitudinal direction (8) of the filter arrangement (100) - are arranged in an alternating manner, and **in that** - as viewed in longitudinal section - a first design of the link (1a) has an inverted V shape and a second design of the link (1b) has a U shape; wherein end folds (13) of the corrugated bellows are connected in an areal manner to limbs of the inverted V shape and of the U shape in such a way that the filter elements (10), in a folded-in state, are able to be set down one upon the other in a harmonica-like manner and, in a folded-out state, bear against one another at their mutually adjacent end folds (13).

2. Filter arrangement according to Claim 1,
**characterized in that**
the links (1) have a reduced cross section (2) at their intended folding edges.

3. Filter arrangement according to one of the preceding claims,
**characterized in that**
the links (1) are manufactured from a filter material.

4. Filter arrangement according to Claim 3,
**characterized in that**
the filter material (1) is a so-called edge strip composed of nonwoven.

5. Filter arrangement according to one of Claims 3 or 4
**characterized in that**
the filter material (1) has anti-allergenic and/or anti-viral properties.

6. Filter arrangement according to one of the preceding claims,
**characterized in that**
the filter medium (12) is of multi-layer design, has at least one functional layer (14) and has a preferred incident-flow direction (L).

7. Filter arrangement according to one of the preceding claims,
**characterized in that**
the filter elements (10) each have a cuboidal shape.

8. Filter arrangement according to one of the preceding claims,
**characterized in that**
all the filter elements (10) are identical in terms of their structure.

## Revendications

1. Agencement de filtre (100) permettant de nettoyer un flux d'air (L), présentant au moins trois éléments filtrants (10), dans lequel chaque élément filtrant (10) dispose d'un soufflet (11) d'un matériau filtrant plissé (12), dans lequel les éléments filtrants (10) sont juxtaposés et respectivement deux éléments filtrants (10) adjacents l'un à l'autre sont reliés ensemble au moyen d'une éclisse de liaison (1),
**caractérisé en ce que**
la terminaison de pli de tous les plis d'extrémité (13) de tous les soufflets (11) est orientée dans une direction (A, B),
**en ce que** les éclisses de liaison (1) présentent deux configurations différentes (1a, 1b), et les différentes configurations des éclisses de liaison, vues dans la direction longitudinale (8) de l'agencement de filtre (100), sont disposées en alternance, et **en ce que**, vue en coupe longitudinale, une première configuration de l'éclisse de liaison (1a) présente une forme de V inversée, et une deuxième configuration de l'éclisse de liaison (1b) présente une forme de U ;
dans lequel les plis d'extrémité (13) des soufflets sont reliés sur toute la surface aux branches de la forme de V inversée ou de la forme de U, de telle sorte que les éléments filtrants (10) peuvent être posés en accordéon les uns sur les autres dans un état replié, et sont adjacents les uns aux autres au niveau de leurs plis d'extrémité (13) dans un état déplié.

2. Agencement de filtre selon la revendication 1, **caractérisé en ce que** les éclisses de liaison (1) présentent une section transversale réduite (2) au niveau de leurs bords de pliage de consigne.

3. Agencement de filtre selon l'une quelconque des revendications précédentes, **caractérisé en ce que** les éclisses de liaison (1) sont fabriquées à partir d'un matériau de filtre.

4. Agencement de filtre selon la revendication 3, **caractérisé en ce que** le matériau de filtre (1) est une bande dite de bord en non-tissé.

5. Agencement de filtre selon l'une quelconque des revendications 3 ou 4, **caractérisé en ce que** le matériau de filtre (1) présente des propriétés anti-allergéniques et/ou antivirales.

6. Agencement de filtre selon l'une quelconque des revendications précédentes, **caractérisé en ce que** le matériau filtrant (12) est réalisé en plusieurs couches, dispose d'au moins une couche de fonction (14) et présente une direction de soufflage (L) préférée.

7. Agencement de filtre selon l'une quelconque des revendications précédentes, **caractérisé en ce que** les éléments filtrants (10) présentent respectivement une forme parallélépipédique.

8. Agencement de filtre selon l'une quelconque des revendications précédentes, **caractérisé en ce que** tous les éléments filtrants (10) sont de structure identique.
